# EUROPEAN PATENT SPECIFICATION

(11) **EP 4 331 353 B1**
(45) Date of publication and mention of the grant of the patent: **08.04.2026**
(21) Application number: 23181189.4
(22) Date of filing: 23.06.2023
(51) Int. Cl.: A01K 89/01

(54) **FISHING REEL AND ONE-WAY CLUTCH**
ANGELROLLE UND EINWEGKUPPLUNG
MOULINET DE PÊCHE ET EMBRAYAGE UNIDIRECTIONNEL

(30) Priority: 29.08.2022 JP 2022135548
(43) Date of publication of application: 06.03.2024
(73) Proprietor: Globeride, Inc., Higashikurume-shi, Tokyo 203-8511 (JP)
(72) Inventor: TSUSHIMA, Daisuke, Higashikurume-shi, 203-8511 (JP); HORIE, Hironori, Higashikurume-shi, 203-8511 (JP)
(74) Representative: Boult Wade Tennant LLP

(56) References cited:
- EP-A1- 4 260 696
- US-A- 5 927 630
- US-A1- 2003 146 321

## Description

### BACKGROUND OF THE INVENTION

### 1. TECHNICAL FIELD

The present invention relates to a fishing reel incorporating a one-way clutch that prevents reverse rotation of a drive shaft, and a one-way clutch.

### 2. DESCRIPTION OF THE RELATED ART

Generally, a spinning reel, which is a fishing reel, incorporates a reverse rotation prevention mechanism that allows rotation of a rotor in a fishing line winding direction by a rotation operation of a handle and prevents reverse rotation of the rotor when the handle is to be reversely rotated. Normally, the reverse rotation prevention mechanism includes a one-way clutch including an inner ring fitted into a pinion gear to prevent rotation, a holder disposed radially outside the inner ring and holding a plurality of rolling members, and an outer ring disposed radially outside the holder and fixed to a reel body to prevent rotation.

The holder of the one-way clutch is screwed and fixed to the reel body, so that an elastic force of a biasing spring that biases the rolling member is maintained, and the rotation of the one-way clutch can be smoothly performed. However, when the holder is screwed to the reel body, the reel body is increased in size by the screwing amount, and problems such as a decrease in assemblability and an inability to perform a single performance inspection in a case where constituent members are individually incorporated occur. For this reason, for example, as disclosed in JP 2010-172272 A and the like, it is known that an assembly structure in which the constituent members of the one-way clutch are integrated is formed, and assembling to the reel body is performed using screwing (a screw seat is provided outside an outer ring and fixed to the reel body).

### RELEVANT REFERENCES

### LIST OF RELEVANT PATENT LITERATURE

Patent Literature 1: Japanese Application Publication No. 2010-172272
US5927630A relates to a fishing reel including: a reel main body; a rotary drive shaft being rotatable in association with a handle; and a one-way clutch of a rolling type for allowing the rotary drive shaft to rotate in one direction and prohibiting the rotary drive shaft from rotating in the other direction to thereby prevent the reversed rotation of the rotary drive shaft.
US2003/0146321A relates to a one-way clutch for a fishing spool that includes a hollow cylindrical mounting seat, an inner ring sleeved non-rotatably on a driving shaft, and a retainer sleeved on the inner ring.

### SUMMARY OF THE INVENTION

In the configuration disclosed in JP 2010-172272 A described above, it is necessary to provide a screw hole for screwing to an assembled structure, and it is necessary to secure strength on the side of the reel body. Therefore, simply assembling the one-way clutch is not sufficient for downsizing the reel body.

When the one-way clutch is assembled, it is necessary to consider configurations and arrangement aspects of the constituent members. For example, when the holder is displaced with respect to the outer ring or fluctuates in an axial direction, a stable operation cannot be obtained as the one-way clutch (smooth rotation cannot be obtained, braking time until reverse rotation is prevented is long, and the like), and assembling is not easy.

The present invention has been made in view of the above problems, and an object thereof is to provide a fishing reel incorporating a one-way clutch, in which a reel body is reduced in size and weight, assembling is easy, and a stable clutch operation is obtained. Another object of the present invention is to provide a one-way clutch in which such functions are obtained.

In order to achieve the above objects, a fishing reel according to the present invention defined in claim 1 incorporates a one-way clutch that allows rotation of a rotation drive shaft supported in a reel body in one direction and prevents rotation in the other direction. The one-way clutch comprises an assembly structure comprising an inner ring, an outer ring, a first holder comprising a holding portion holding a biasing spring for biasing a plurality of rolling members, and a second holder attached to the first holder so as to hold the outer ring in an axial direction. The reel body is provided with a regulation portion that is fixed so as to regulate the movement of the one-way clutch in a rotation direction. The first holder and the outer ring are respectively provided with one or more stoppers that protrude radially outward and overlap each other in the axial direction. The movement of the one-way clutch in the rotation direction is regulated by the regulation portion of the reel body and each stopper. The outer ring has play with respect to the regulation portion. The first holder is in contact with the regulation portion without a gap.

According to the fishing reel described above, since the one-way clutch is assembled, assemblability with respect to the reel body can be improved. A holder to be a constituent member comprises a first holder that comprises a holding portion holding a biasing spring for biasing a plurality of rolling members; and a second holder that is attached to the first holder so as to hold an outer ring in an axial direction. The first holder and the outer ring are respectively provided with stoppers protruding radially outward, and the movement of the first holder and the outer ring in a rotation direction is regulated by the regulation portion of the reel body. Therefore, the holder is prevented from fluctuating in the axial direction or being displaced with respect to the outer ring,
and a stable operation can be obtained as the one-way clutch. Further, since it is not necessary to perform screwing to the reel body, it is not necessary to have a structure for securing strength, such as forming a screw hole on the side of the reel body, and it is possible to reduce the size and weight of the reel body.

Further, the present invention provides a one-way clutch defined in claim 8, which clutch is for being incorporated in a fishing reel and in which the above-described functions are obtained.

According to the present invention, it is possible to obtain a fishing reel capable of reducing the size and weight of a reel body, facilitating assembling, and obtaining a stable clutch operation, and it is possible to obtain a one-way clutch capable of obtaining such functions.

### BRIEF DESCRIPTION OF THE DRAWINGS

FIG. 1 is an exploded perspective view illustrating a first embodiment of a fishing reel (spinning reel) according to the present invention;
FIG. 2 is a view illustrating an internal configuration of the spinning reel illustrated in FIG. 1;
FIG. 3 is a perspective view of a one-way clutch incorporated in the fishing reel;
FIG. 4 is a plan view in which an anticorrosion plate is installed in the one-way clutch illustrated in FIG. 3;
FIG. 5 is a perspective view of the one-way clutch illustrated in FIG. 4;
FIG. 6 is a side view of the one-way clutch illustrated in FIG. 4;
FIG. 7 is a cross-sectional view taken along the line A-A in FIG. 6;
FIG. 8 is a cross-sectional view taken along the line B-B in FIG. 6;
FIG. 9 is a perspective view illustrating an example of an anticorrosion plate disposed in the one-way clutch;
FIG. 10 is a view illustrating a second embodiment of the one-way clutch and illustrating a fitting state of a first holder and a regulation portion on the side of a reel body;
FIG. 11 is a perspective view illustrating a third embodiment of the one-way clutch and illustrating a configuration of a positioning portion disposed between a first holder and an outer ring;
FIG. 12 is an exploded perspective view illustrating another configuration example of the fishing reel according to the present invention; and
FIG. 13 is a perspective view illustrating a fixed state of the one-way clutch illustrated in FIG. 12.

### DETAILED DESCRIPTION

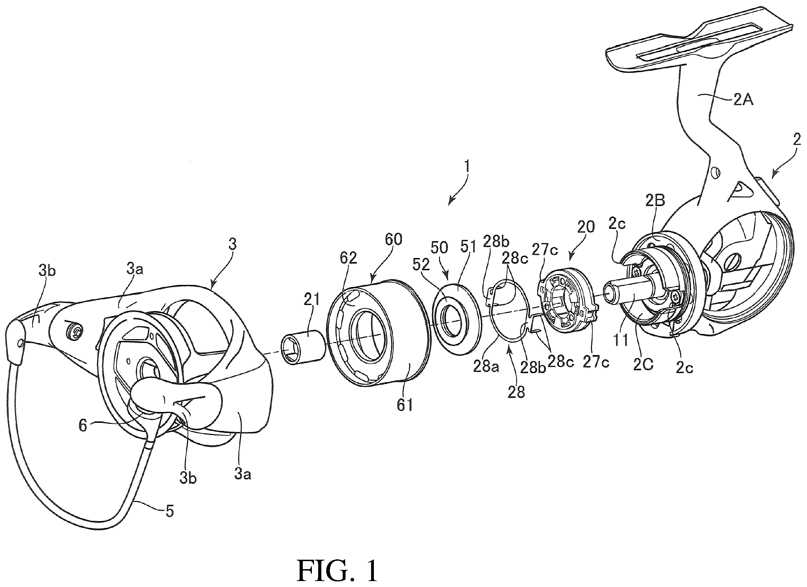

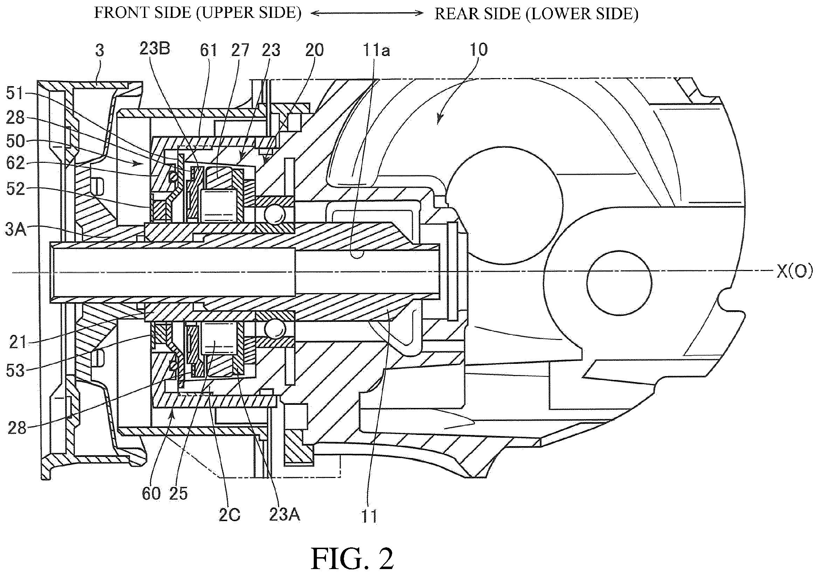

FIGS. 1 and 2 are views illustrating an embodiment of a spinning reel which is a fishing reel according to the present invention, in which FIG. 1 is an exploded perspective view, and FIG. 2 is a view illustrating an internal configuration.

In the following description of a one-way clutch, a direction on a spool side is defined as a front side (upper side), a direction on a reel body side is defined as a rear side (lower side), an axial direction X is defined as an axial direction of a spool shaft, and a center O is defined as an axial position of the spool shaft (see FIG. 2).

First, an outline of an overall configuration of the spinning reel of the present embodiment will be described.

A reel leg 2A to be mounted on a fishing rod is formed integrally with a reel body 2 of a spinning reel (hereinafter, referred to as the reel) 1. A rotor 3 that is rotatably supported and a known spool (not illustrated in the drawings) that is supported to be movable back and forth in synchronization with the rotational motion of the rotor 3 are disposed in front of the reel body 2.

The rotor 3 comprises a pair of arm portions 3a that rotates around the spool, and a bail support member 3b to which a base end of a bail 5 is attached is rotatably supported at a front end of each arm portion 3a between a fishing line winding position and a fishing line releasing position. In this case, one base end of the bail 5 is attached to a fishing line guide portion (line roller) 6 provided integrally with the bail support member 3b.

In the reel body 2, a handle shaft is rotatably supported via a bearing, and a handle is attached to a protrusion end of the handle shaft. The handle shaft is provided with a driving force transmission mechanism 10 that transmits a driving force to the rotor 3 to rotationally drive the rotor when the handle is rotationally operated.

As known, the driving force transmission mechanism 10 comprises a drive gear integrally rotatably mounted on the handle shaft, and a pinion 11 comprising a pinion tooth portion meshing with the drive gear. The pinion 11 extends in a front-rear direction orthogonal to the handle shaft, and has a function as a rotation drive shaft in which a cavity portion 11a extending in an axial direction is formed. In this case, the spool shaft that engages with a known oscillating mechanism moving the spool back and forth when the handle is rotationally operated is inserted through the cavity portion 11a, and the spool is mounted on a distal end thereof.

The pinion 11 is rotatably supported by the reel body 1. Further, the pinion 11 extends toward the spool side, and the rotor 3 is integrally rotatably attached to a distal end of the pinion 11. The rotor 3 is fixed by externally fitting a through-hole of a boss portion 3A formed at a center portion into the distal end of the pinion 11 and tightening a nut (not illustrated in the drawings). A one-way clutch 20 constituting a reverse rotation prevention mechanism is disposed on the pinion 11.

With the above configuration, when the handle is wound, the rotor 3 is rotationally driven via the driving force transmission mechanism 10, and the spool is reciprocated in the front-rear direction via the oscillating mechanism and the spool shaft. Therefore, the fishing line is evenly wound around the spool via the fishing line guide portion 6 of the rotationally driven rotor 3.

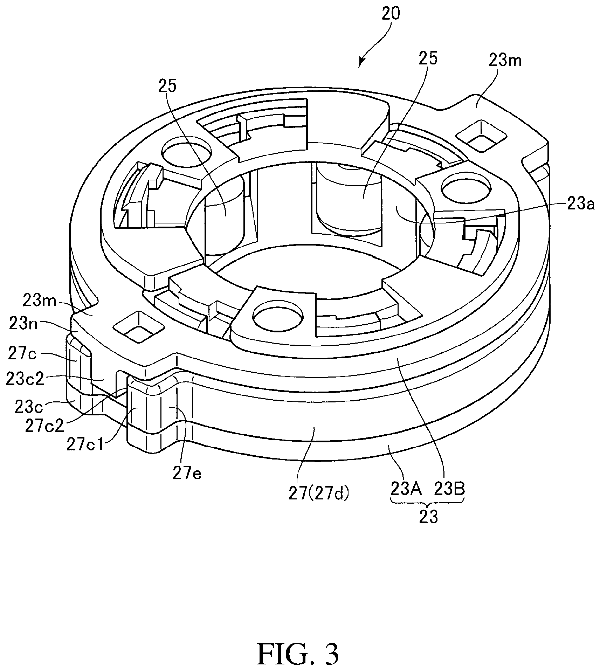

Next, the one-way clutch 20 of the present embodiment will be described with reference to FIGS. 3 to 9 in addition to FIGS. 1 and 2.

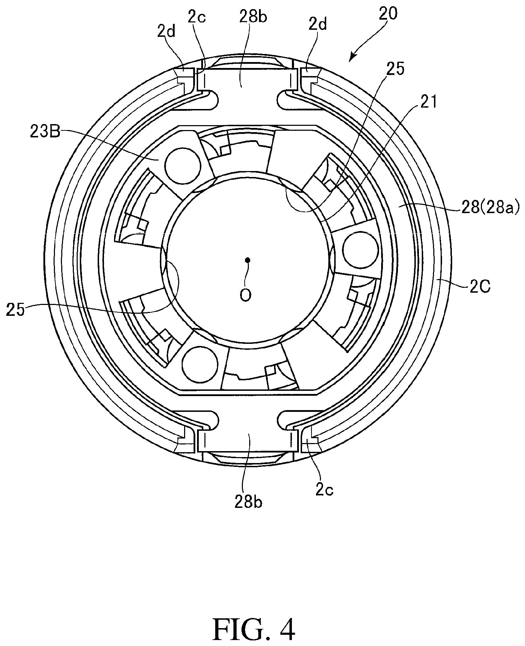

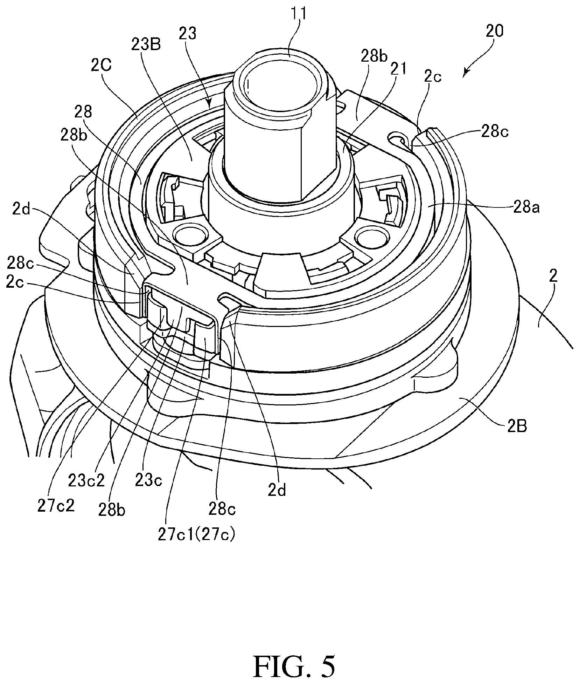

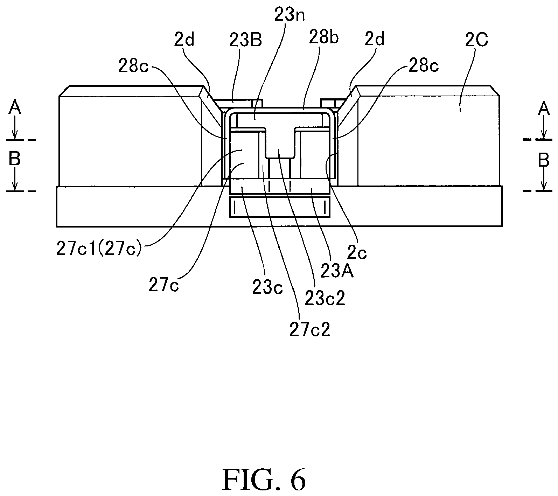

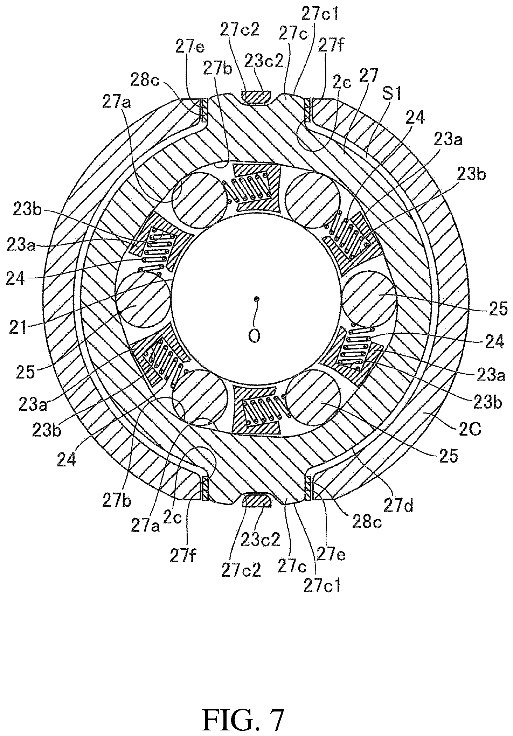

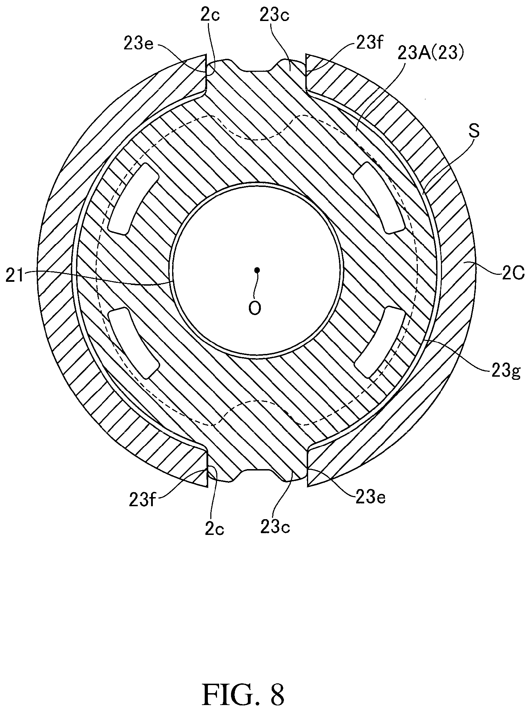

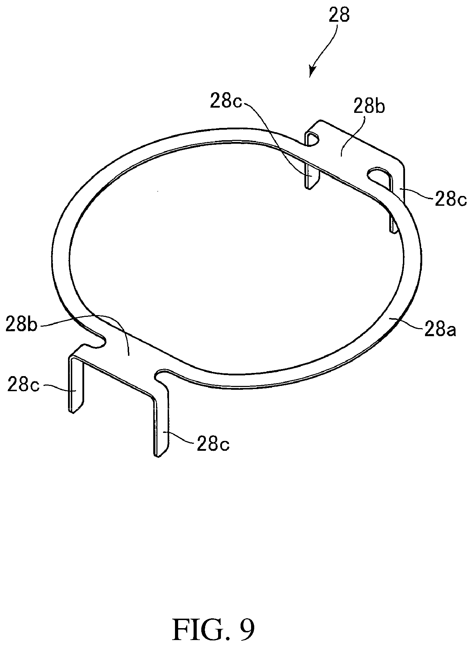

FIGS. 3 to 9 illustrate the one-way clutch having an assembly structure incorporated in the spinning reel illustrated in FIG. 1. FIG. 3 is a perspective view, FIG. 4 is a plan view in which an anticorrosion plate is installed, FIG. 5 is a perspective view of the one-way clutch illustrated in FIG. 4, FIG. 6 is a side view of the one-way clutch illustrated in FIG. 4, FIG. 7 is a cross-sectional view taken along the line A-A of FIG. 6, FIG. 8 is a cross-sectional view taken along the line B-B of FIG. 6, and FIG. 9 is a perspective view illustrating an example of the anticorrosion plate disposed in the one-way clutch.

As illustrated in FIG. 1, a base portion 2B that is formed in a substantially disk shape is disposed on the spool side of the reel body 2, and a regulation portion that regulates the movement of the one-way clutch 20 in the rotation direction is provided on a surface portion of the base portion 2B. The regulation portion of the present embodiment is configured as a circumferential wall (cylindrical portion protruding in the axial direction) 2C provided on the reel body 2. The pinion 11 is rotatably supported through a center portion of the circumferential wall 2C, and the one-way clutch 20 is disposed in an intermediate portion thereof. In this case, notch portions 2c are formed in the circumferential wall 2C at 180° intervals such that a protrusion portion (stopper) of the one-way clutch 20 described later is disposed.

The pinion 11 is rotationally driven via the drive gear by a rotation operation of the handle. Further, the one-way clutch 20 is disposed in the intermediate portion of the pinion 11, has a function of allowing the rotation of the pinion 11 in the fishing line winding direction and preventing the reverse rotation, and has an inner ring 21, an outer ring 27, and a holder 23 comprising a holding portion 23a holding a biasing spring 24 for biasing a plurality of rolling members 25. The holder 23 comprises a first holder 23A comprising the holding portion 23a and a second holder 23B attached to the first holder 23A so as to hold the outer ring 27 in the axial direction. These constituent members are assembled (assembly structure in which a plurality of constituent members are integrated; also referred to as ASSY), and can be handled integrally.

By configuring the holder 23 with a plurality of members (the first holder 23A and the second holder 23B) as described above, the constituent members comprising the outer ring and the like are suppressed from coming off in the axial direction and assembling is facilitated.

The inner ring 21 is prevented from rotating with respect to the pinion 11, and has a function as a drive shaft that rotates integrally with the pinion 11. Specifically, a cross section of the pinion 11 has a shape in which a non-circular portion is partially formed, and the inner ring 21 is rotatable integrally with the pinion 11 by fitting the non-circular portion of the inner ring 21 into this portion (see FIG. 5).

The holder 23 is disposed radially outside the inner ring 21, and is configured by integrating the first holder 23A and the second holder 23B as described above. In the present embodiment, the first holder 23A is disposed on the lower side, and the second holder 23B is disposed on the upper side. The first holder 23A and the second holder 23B are integrally assembled so as to hold the outer ring 27. In this case, the first holder 23A may be defined as the upper side, and the second holder 23B may be defined as the lower side.

Note that a connection structure (engagement fixing portion) that integrates the first holder 23A and the second holder 23B is not particularly limited. For example, the first holder 23A may be provided with a displaceable convex portion protruding in the axial direction at a predetermined interval in the circumferential direction, and a concave portion into which the convex portion is fitted may be formed at a corresponding position of the second holder 23B. In this configuration, the first holder 23A and the second holder 23B can be integrated by moving the second holder 23B in the axial direction so as to hold the outer ring 27 and engaging the convex portion with the concave portion. Alternatively, the first holder 23A and the second holder 23B may be integrated by welding, screwing, or the like.

The first holder 23A is provided with the holding portions 23a disposed at regular intervals in the circumferential direction. Each holding portion 23a is provided with a recess 23b that is opened (opened in a counterclockwise direction as illustrated in FIG. 7) in the circumferential direction, and the biasing spring 24 is held in each recess 23b. The rolling members 25 are disposed between the respective holding portions, and each rolling member 25 is biased in the circumferential direction (counterclockwise direction; reverse rotation direction in FIG. 7) by the biasing spring 24.

The outer ring 27 is disposed radially outside each rolling member 25 and is formed in a ring shape (or a substantially ring shape) (see FIG. 7). On an inner circumferential surface of the outer ring 27, a wedge region 27a for preventing the rotation of each rolling member 25 and a free region 27b for freely rotating the rolling member 25 are connected and formed. Each rolling member 25 held by the holder 23 (first holder 23A) is constantly biased toward the wedge region by the biasing spring 24. An outer circumferential surface 27d of the outer ring 27 is formed in a circular shape (including a substantially circular shape).

A protrusion portion 27c is provided on a part of the outer ring 27 formed in the substantially ring shape so as to protrude radially outward. The protrusion portion has a function as a stopper that regulates the rotation of the outer ring 27 (hereinafter, also referred to as the stopper 27c). The stopper 27c is integrally formed so as to protrude radially outward from the outer circumferential surface 27d of the outer ring 27, and is provided at one or more places. In this case, there is a possibility that a large torque is applied to the outer ring, and stress concentrates at one place to cause a deviation or the like. Therefore, it is preferable to form two or more stoppers at equal intervals. In the present embodiment, two stoppers are provided so as to face each other with the axis (center O) therebetween at 180° intervals. Each stopper 27c has a constant width in the circumferential direction, and both sides 27e and 27f in the circumferential direction have a rotation prevention function.

As illustrated in FIG. 8, the first holder 23A has a shape similar to that of the outer ring 27, and preferably, a protrusion portion 23c having substantially the same shape is integrally formed at the same position (position overlapping in the axial direction) as the stopper 27c of the outer ring 27. Similarly to the outer ring, the two protrusion portions 23c are provided so as to face each other with the axis (center O) therebetween at an interval of 180°, and have a function as the stoppers (hereinafter, also referred to as the stoppers 23c). The stopper 23c has a constant width in the circumferential direction, and both sides 23e and 23f in the circumferential direction have a rotation prevention function.

The circumferential wall 2C protruding from the reel body 2 is provided with the notch portion 2c penetrating the circumferential wall in the radial direction. The notch portion 2c is formed to such an extent that the above-described stopper 23c of the first holder 23A and the stopper 27c of the outer ring 27 can be disposed, and by fitting each of the stoppers 23c and 27c into the notch portion 2c and disposing the second holder 23B from the surface thereof, the one-way clutch is rotation-prevented and fixed, and the coming-off of the outer ring in the axial direction is regulated (the movement in the circumferential direction and the axial direction is regulated).

Although one or more notch portions 2c may be formed in the circumferential wall 2C, in the present embodiment, two notch portions 2c are formed at equal intervals in the circumferential direction (two notch portions symmetrical with respect to the center O at 180° intervals) so as to be the same number of notch portions as the number of stoppers formed in the first holder 23A and the outer ring 27. As described above, by providing two or more notch portions 2c to be the same number of notch portions as the number of stoppers formed in the first holder 23A and the outer ring 27, it is possible to stably hold the one-way clutch without rattling.

The outer circumferential surfaces of the stoppers 23c and 27c are exposed in the radial direction at the notch portion 2c of the circumferential wall 2C, and can be pinched with fingers. Therefore, the first holder 23A and the outer ring 27 can be easily gripped integrally by each exposed stopper, and the attachment/detachment workability of the one-way clutch 20 can be improved. In this case, a chamfered portion 2d is preferably formed on the opening side (upper end side) of the notch portion 2c so as to gradually spread as it shifts upward (see FIG. 6). By forming the chamfered portion 2d, it is easy to perform the attachment/detachment operation of the first holder 23A and the outer ring 27.

In the above configuration, it is preferable that the stopper 23c of the first holder 23A and the notch portion 2c are configured to be in contact with each other without a gap (in contact with each other in a state where there is no play) as illustrated in FIG. 8. That is, when there is play between the stopper 23c and the notch portion 2c, in a state where the inner ring 21 rotates in the fishing line winding direction, the first holder 23A holding the biasing spring 24 also receives a corotation action by the inner ring, and the biasing spring 24 moves in the circumferential direction (in FIG. 7, the biasing spring 24 rotates together with the first holder in the clockwise direction by the play). If a load is applied to the reverse rotation side in this state, a time for moving each rolling member 25 to the wedge region 27a of the outer ring 27 is extended by the play, so that it takes time to brake, and quick lock performance cannot be exhibited. On the other hand, as illustrated in FIG. 8, by bringing the stopper 23c of the first holder 23A and the notch portion 2c into a fitting state without a gap, a fixed position of the biasing spring 24 can be maintained, and it is possible to exhibit quick lock performance at the time of reverse rotation without taking time until the operation due to the play.

Note that a gap S may be formed between an outer circumferential surface 23g of the first holder 23A and the circumferential wall 2C to such an extent that tolerance of the first holder 23A can be absorbed.

In addition, as illustrated in FIG. 7, the outer ring 27 is preferably configured to have some play S1 between the stopper 27c and the notch portion 2c and between the outer circumferential surface of the outer ring 27 and the inner circumferential surface of the circumferential wall 2C. With such a configuration, even if some tolerance is generated between the outer ring 27 and the circumferential wall 2C and the concentricity is deviated with respect to the center O, the deviation can be absorbed. As a result, backlash can be prevented while smooth rotation performance is secured, and the attachment/detachment operation can be easily performed. In addition, by configuring the outer ring 27 to be fitted into the circumferential wall 2C so that the outer ring and the circumferential wall are in a non-contact state (play S1 occurs), when the inner ring 21 is centered, a non-contact state can be maintained between the outer ring 27 and the circumferential wall 2C, and conduction between both members can be prevented.

In the above configuration, it is preferable to provide a positioning portion for positioning the outer ring 27 and the second holder 23B between the outer ring 27 and the second holder 23B. By providing such a positioning portion, as described above, when the first holder 23A and the second holder 23B are integrated by the connection structure (engagement fixing portion), a positional relation between them is maintained, and the one-way clutch in which the above-described constituent members are assembled can be easily incorporated into the reel body. That is, since positioning is performed in a state where the stopper 23c of the first holder 23A and the stopper 27c of the outer ring 27 are aligned, handling is facilitated, and assembling to the notch portion 2c of the circumferential wall 2C is facilitated.

The positioning portion may fix the position between the outer ring 27 and the holder 23. For example, the positioning portion of the present embodiment comprises a recess 27c2 formed in an outer circumferential surface 27c1 of the stopper 27c of the outer ring 27 and a projection portion 23c2 formed in the second holder 23B and fitted into the recess 27c2. In this case, the second holder 23B is provided with a pair of protrusion pieces 23m protruding in the radial direction at positions overlapping the above-described stoppers 23c and 27c, and the projection portion 23c2 is formed to hang down on an outer circumferential surface 23n of the protrusion piece 23m.

By disposing the positioning portion described above, the first holder 23A, the outer ring 27, and the second holder 23B formed in a disk shape are overlapped, and the protrusion piece 23m of the second holder 23B can be easily aligned with the stopper 23c of the first holder 23A and the stopper 27c of the outer ring 27 protruding in the radial direction. Therefore, by covering the outer ring 27 with the second holder 23B along the axial direction, the projection portion 23c2 is fitted into the recess 27c2 to perform positioning, and assembling can be easily performed.

Note that a diameter of the circumferential wall 2C (a diameter of the outer circumferential surface of the circumferential wall) and an outermost diameter of the outer ring 27 (a diameter of the outer circumferential surface 27c1 on the exposed side of the stopper 27c) are the same, so that the one-way clutch can be downsized.

Further, in the present embodiment, an electrolytic corrosion prevention plate (also referred to as an anticorrosion plate or an anticorrosion member) 28 formed in a ring shape is mounted on the second holder 23B so as to overlap in the axial direction (see FIG. 9).

In general, the outer ring of the one-way clutch is disposed so as to be in contact with the cylindrical portion formed in the reel body. Normally, the outer ring has a structure in which a corrosion resistant film such as nickel plating is formed on SUS. For this reason, when the side of the reel body is made of alumite-treated ADC12 or a non-metallic material such as a high-strength resin material, a problem of corrosion hardly occurs between the outer ring and the reel body. However, when the reel body is formed of a magnesium-based metallic material, a potential difference between the outer ring and the reel body increases, and corrosion (electrolytic corrosion) easily occurs.

In the above configuration, since the contact portion between the outer ring 27 and the circumferential wall 2C of the reel body 2 is the notch portion 2c and both sides 27e and 27f in the circumferential direction of the stopper 27c that abuts on the notch portion 2c, this portion may be in an insulated state.

The anticorrosion plate 28 of the present embodiment is configured to be attachable and detachable from the axial direction so as to overlap the one-way clutch 20, and is configured in a plate shape and a ring shape so as not to increase the size of the reel body.

The anticorrosion plate 28 can be configured as illustrated in FIG. 9, for example.

The anticorrosion plate 28 illustrated in FIG. 9 comprises a ring-shaped main body 28a that is disposed radially outside the second holder 23B and is placed on a surface portion of the second holder 23B. Protrusion pieces 28b protruding radially outward are formed on both sides in a diameter direction of the main body 28a, and a pair of leg portions 28c hanging down in the axial direction is provided on both sides of each protrusion piece 28b.

The protrusion piece 28b is formed in substantially the same shape as the stopper 27c of the outer ring 27, and the pair of leg portions 28c is configured to be interposed (inserted) between both sides 27e and 27f in the circumferential direction of the stopper 27c and the notch portion 2c, when the main body 28a is placed on the surface portion of the outer ring 27 from the axial direction (see FIGS. 4 to 7). In this case, if the outer ring 27 has some play between the stopper 27c and the notch portion 2c, even in the configuration in which the anticorrosion plate 28 is installed, similar play may be set to occur between the leg portion 28c to be interposed and the notch portion 2c.

The anticorrosion plate 28 may be made of an insulating material that is interposed (the pair of leg portions 28c is interposed) between the anticorrosion plate and both members and is not conducted. For example, when the reel body (tubular portion) is made of magnesium, it is preferable to use a material having a small potential difference with the outer ring, for example, an aluminum-based material (alumite-treated aluminum alloy). Such a material can be easily produced by press molding or the like, and is nonmagnetic. Therefore, even if the following magnetic seal mechanism is disposed, the material is not attracted to a magnet, and is not conducted by forming an alumite layer. Furthermore, since the shape is stable by press molding, it is easy to perform incorporation and detachment, and rotational performance is not affected.

As a constituent material of the anticorrosion plate (anticorrosion member), an appropriate material may be selected according to the materials of the outer ring 27 and the reel body, and the anticorrosion plate can be made of other metal materials, resin materials, or the like. In addition, the shape of the anticorrosion plate can be appropriately modified as long as the anticorrosion plate has a configuration in which a member having an anticorrosion effect is inserted between the one-way clutch and the reel body.

Note that the anticorrosion plate 28 may not be disposed.

According to the one-way clutch 20 having the above-described configuration and the fishing reel incorporating the same, rotation (reverse rotation) of the handle (rotor 3) in a fishing line feeding direction is prevented.

That is, when the pinion is rotationally driven by rotationally operating the handle in a fishing line winding direction (rotationally driven in the clockwise direction in FIG. 7), the inner ring 21 rotates in the same direction together with the pinion. At this time, since the rolling member 25 held by the holder 23 (first holder 23A) moves to the free region 27b of the outer ring 27, the rotational force of the inner ring 21 is not transmitted to the outer ring 27, and the rotor 3 can rotate together with the pinion 11 without any problem.

On the other hand, when the inner ring 21 tries to rotate in the reverse direction (the rotor 3 rotates in the fishing line feeding direction) together with the pinion, the rolling member 25 held by the holder 23 (first holder 23A) rolls in the counterclockwise direction and is located in the wedge region 27a of the outer ring 27 by the biasing spring 24, so that the rotational force of the inner ring 21 is transmitted to the outer ring 27. In this case, since the rotation of the outer ring 27 is regulated by the stopper 27c, reverse rotation of the pinion and the rotor 3 is prevented.

Further, the one-way clutch 20 described above has a configuration in which the stoppers 23c and 27c are disposed in the notch portion 2c formed in the circumferential wall 2C of the reel body 2, and it is not necessary to assemble the one-way clutch to the reel body with a screw. Therefore, it is not necessary to provide a bearing surface of the screw radially outside the outer ring or to improve the strength for the bearing surface. As a result, handling is easy, and miniaturization and weight reduction of the entire reel can be achieved.

In particular, in the one-way clutch 20, the first holder 23A holding the rolling member 25 in a biased manner, the outer ring 27, and the second holder 23B are assembled in advance, and the outer ring 27 is retained by both the holders 23A and 23B, so that the handling property is facilitated while the size and weight are reduced, the maintainability is improved, and the assemblability with respect to the reel body is improved.

In addition, the first holder 23A and the outer ring 27 are provided with the stoppers 23c and 27c, respectively, and the stoppers are disposed in the notch portions 2c formed in the circumferential wall 2C of the reel body 2 (preferably, disposed at two or more locations), so that the load applied in the reverse rotation direction can be effectively received. In this case, the protrusion pieces 23m are formed in the second holder 23B and overlap the stoppers 23c and 27c in the axial direction (see FIG. 3), so that the constituent members can be easily attached and detached by being pinched with fingers at a time, it is possible to improve the handling property as the assembly structure, and it is possible to improve the maintainability. That is, since the stoppers 23c and 27c and the protrusion pieces 23m are provided symmetrically in the diameter direction, they can be easily pinched, and the attachment/detachment operation of the one-way clutch can be easily performed.

By providing a gap between the outer ring 27 and the inner circumferential surface and the notch portion 2c of the circumferential wall 2C of the reel body, smooth rotation can be secured even if misalignment or the like occurs, and a stable reverse rotation prevention action can be exhibited. In this case, by fitting the first holder 23A into the reel body (notch portion 2c) without a gap, the rotation of the holder 23 (corotation of the biasing spring 24) associated with the fishing line winding direction of the inner ring 21 is regulated, and in addition to smooth rotation, it does not take time to brake during reverse rotation, and it is possible to exhibit a reverse rotation prevention function with stable operability.

After the one-way clutch 20 is incorporated in the reel body, as illustrated in FIGS. 1 and 2, a magnetic seal mechanism 50 may be disposed so as to enhance waterproof and dust-proof effects on the one-way clutch 20.

As known, the magnetic seal mechanism 50 comprises ring-shaped magnetic plates (electrode plates) 51 and 52 disposed with a minute gap between the magnetic plates and the outer circumferential surface of the drive shaft (inner ring 21), and a ring-shaped magnet 53 held between the magnetic plates, and has a configuration in which the gap between the drive shaft and the magnetic plate is filled with a magnetic fluid.

In the present embodiment, a waterproof cap 60 is provided on the reel body so as to wrap the circumferential wall 2C and the one-way clutch 20. The waterproof cap 60 comprises a shape comprising a cylindrical portion 61 surrounding the one-way clutch 20 and a cover portion 62 closing an opening on the spool side, and the magnetic plate 51 of the magnetic seal mechanism 50 is in close contact with an inner surface of the cover portion 62.

As described above, the magnetic seal mechanism 50 is disposed on the spool side of the one-way clutch 20, and the waterproof cap 60 is provided so as to wrap the circumferential wall 2C and the one-way clutch 20, so that it is possible to prevent entry of a foreign material such as moisture or dust into the one-way clutch 20 and to enhance durability.

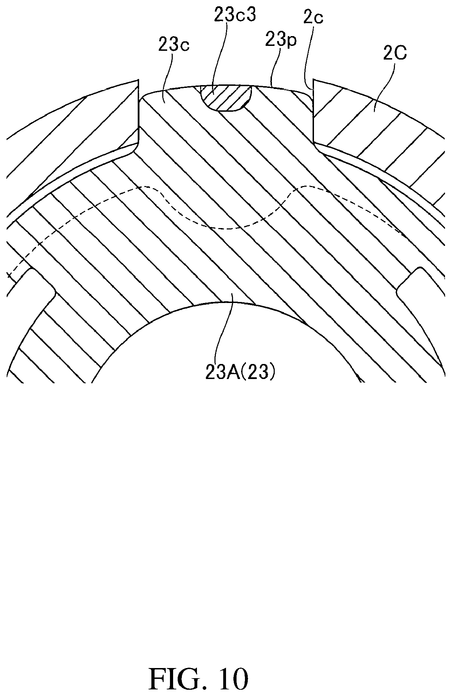

FIG. 10 is a view illustrating a second embodiment of the one-way clutch and illustrating a fitting state between a first holder 35A and the regulation portion (notch portion 2c) on the side of the reel body. In the embodiment described below, components similar to those of the above-described embodiment are denoted by the same reference numerals, and detailed description thereof will be omitted.

In the embodiment described above, the positioning portion is formed between the outer ring 27 and the second holder 23B, specifically, as illustrated in FIGS. 5 to 7, the recess 27c2 is formed in the outer circumferential surface 27c1 of the stopper 27c of the outer ring 27, and the projection portion 23c2 fitted into the recess 27c2 is formed in the second holder 23B. However, the projection portion may be formed in the first holder 23A. That is, a projection portion 23c3 having a similar positioning function may be integrally formed on an outer circumferential surface 23p of each stopper 23c of the first holder 23A toward the upper side in the axial direction.

As described above, by forming the projection portion constituting the positioning portion in the first holder 23A, the second holder 23B can be replaced with a structure having no projection portion, so that a degree of freedom in design can be improved.

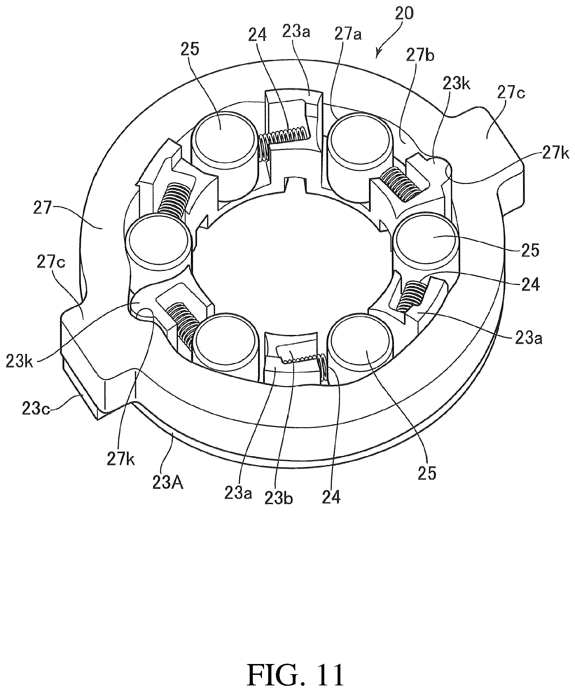

FIG. 11 is a perspective view illustrating a third embodiment of the one-way clutch and illustrating a configuration of the positioning portion disposed between the first holder and the outer ring.

The positioning portion described above is configured by the recess 27c2 formed on the outer circumferential surface of the stopper of the outer ring 27 and the projection portions 23c3 and 23c2 formed on the first holder or the second holder, but may be configured by, for example, a recess 27k formed on the inner circumferential surface of the outer ring 27 and a radial protrusion portion 23k formed on the first holder 23A and fitted into the recess 27k.

As such, by positioning on the radially inner side of the outer ring 27, the positioning portion is not exposed radially outward, and it is possible to prevent the projection portions 23c2 and 23c3 in the above-described embodiment from being damaged. In this case, formation positions, shapes, and numbers of the recess 27k and the radial protrusion portion 23k fitted into the recess are not limited, but it is possible to secure strength by forming the recess and the radial protrusion portion in the portion of the stopper 27c protruding in the radial direction. The recess 27k can be easily formed by punching together with the wedge region 27a and the free region 27b.

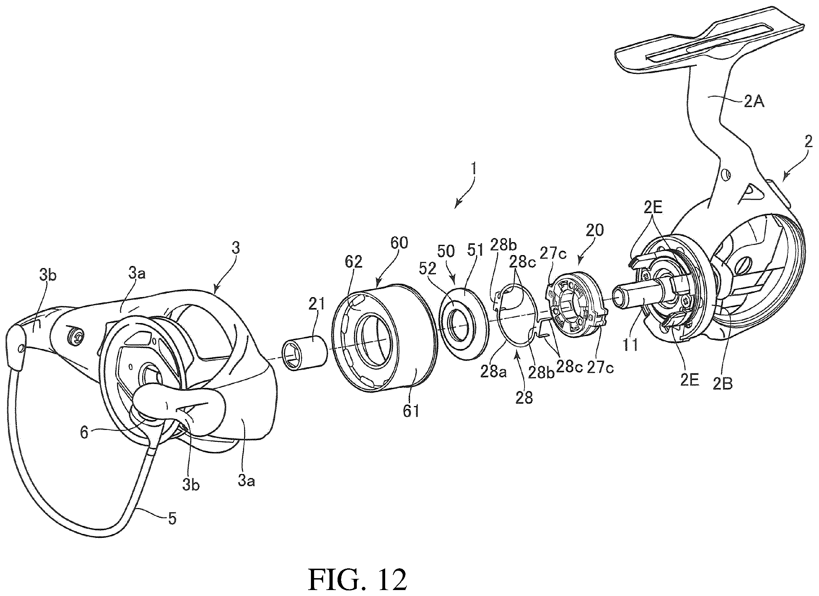

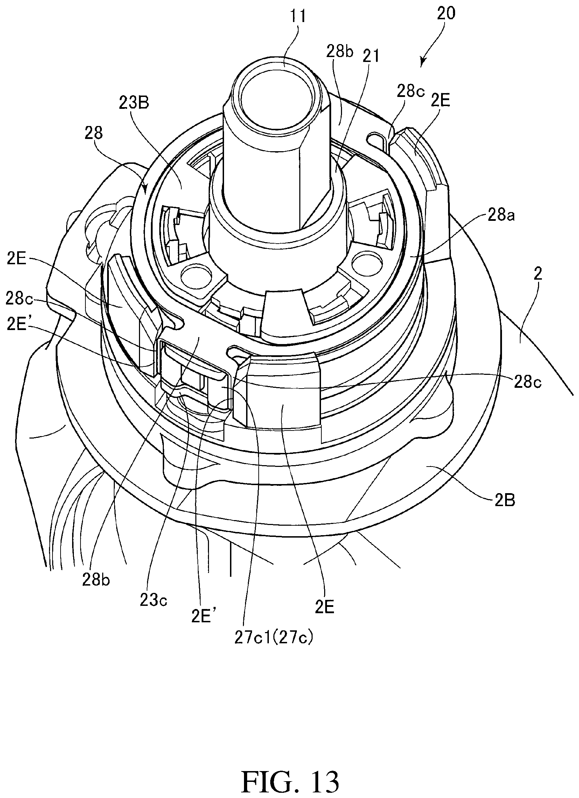

FIG. 12 is an exploded perspective view illustrating another configuration example of the fishing reel according to the present invention, and FIG. 13 is a perspective view illustrating a fixed state of the one-way clutch illustrated in FIG. 12.

The one-way clutch 20 of the present embodiment has an assembly structure similarly to the above-described embodiment, and the first holder 23A and the outer ring 27 are provided with the stoppers 23c and 27c at 180° intervals. Further, the reel body 2 is formed with abutting portions (regulation portions) 2E on which side surfaces of the stoppers 23c and 27c abut to regulate rotation of the outer ring. In this case, the abutting portion 2E is not configured in a cylindrical shape as in the first embodiment, but may have a structure (for example, a boss, a rib, and the like) in which the abutting portion 2E protrudes in an axial direction and the side surface of the stopper abuts on the abutting portion 2E to regulate the rotation. Therefore, in a case of a configuration in which the stopper is provided at one place on the first holder and the outer ring, the abutting portion may be provided to abut on the stopper at two points on both sides in a circumferential direction of the stopper so as to regulate the rotation in both directions.

Since the stoppers 23c and 27c of the present embodiment are formed at two places at 180° intervals, the abutting portions 2E are provided on both sides in the circumferential direction of the respective stoppers, and the abutting portions 2E are configured to abut on the stoppers at two points on both sides in the circumferential direction of the respective stoppers (side surfaces 2E' of the abutting portions 2E).

According to such a configuration, similarly to the embodiment described above, corrosion of the reel body can be prevented by the anticorrosion plate 28, the one-way clutch 20 can be fixed to prevent rotation without providing the circumferential wall 2C having the notch portion 2c, and weight reduction and size reduction can be achieved. In such a configuration, since a space is generated around the abutting portion, the one-way clutch 20 can be easily attached and detached.

Furthermore, the abutting portion 2E is preferably formed so as to abut on the stopper at two points on the radially inner side of outermost-diameter positions of the stoppers 23c and 27c.

In such a configuration, since the abutting portion 2E can be thinned, the weight can be further reduced.

The embodiments according to the present invention have been described above, but the present invention is not limited to the embodiments and may be modified in various ways.

The shapes of the stoppers 23c and 27c having the above-described configuration can be appropriately modified. For example, the exposed surface of the stopper may or may not protrude radially from the circumferential wall 2C in the notch portion 2c of the circumferential wall 2C. Further, in the configuration illustrated in FIG. 12, the stopper is configured to abut on the abutting portion 2E on both sides in the circumferential direction of the stopper. However, a recess may be formed along the axial direction in the center portion of the stopper, and the abutting portion may be formed so as to be fitted into the recess. Alternatively, an abutting portion extending in the axial direction with a U-shaped cross section may be provided on the reel body so as to abut on both sides of the stopper.

In the above structure, the stopper 23c of the first holder 23A and the stopper 27c of the outer ring 27 are configured to overlap each other at the same position, but may be configured to overlap each other at positions shifted in the circumferential direction.

Although the one-way clutch of the above-described embodiment prevents the reverse rotation of the rotor by fixing the holder 23, the one-way clutch may have a structure in which an operation member protruding to the outside of the reel body is provided, the rolling member is located in the free region by rotating the holder by the operation of the operation member, and the reverse rotation of the rotor is allowed. A regulation plate (not illustrated in the drawings) may be separately disposed adjacent to the one-way clutch 20 so as to regulate the axial movement of the one-way clutch 20.

In the present embodiment, the spinning reel is exemplified as the fishing reel, but the one-way clutch 20 assembled as described above can also be applied to other reels (double bearing reels and the like) in which the one-way clutch can be incorporated.

### Reference Signs List

- 1: spinning reel (fishing reel)

- 2: reel body
- 2C: circumferential wall (regulation portion)
- 2c: notch portion
- 3: rotor
- 20: one-way clutch
- 23: holder
- 23A: first holder
- 23B: second holder
- 23c: stopper
- 27: outer ring
- 27c: stopper

## Claims

1. A fishing reel (1) incorporating a one-way clutch that allows rotation of a rotation drive shaft supported in a reel body (2) in one direction and prevents rotation in the other direction, wherein
the one-way clutch (20) has an assembly structure comprising an inner ring (21), an outer ring (27), a first holder (23A) comprising a holding portion holding a biasing spring (24) for biasing a plurality of rolling members, and a second holder (23B) attached to the first holder so as to hold the outer ring (27) in an axial direction,
the reel body (2) is provided with a regulation portion that is fixed so as to regulate the movement of the one-way clutch (20) in a rotation direction,
the first holder (23A) and the outer ring (27) are respectively provided with one or more stoppers (23c, 27c) that protrude radially outward and overlap each other in the axial direction,
the movement of the one-way clutch (20) in the rotation direction is regulated by the regulation portion of the reel body (2) and each stopper (23c, 27c),
the outer ring (27) has play with respect to the regulation portion, and
the first holder (23A) is in contact with the regulation portion without a gap.

2. The fishing reel (1) according to claim 1, wherein
the regulation portion is a notch portion (2c) which is formed along a circumferential direction on a circumferential wall (2C) provided in the reel body (2) and in which a stopper (23c) of the one or more stoppers (23c) of the first holder and a stopper (27c) of the one or more stoppers (27c) of the outer ring (27) is disposed.

3. The fishing reel (1) according to claim 2, wherein
two or more notch portions (2c) are provided at equal intervals in the circumferential direction of the circumferential wall, and the same number of stoppers (23c, 27c) of the first holder (23) and the outer ring (27) as the number of the notch portions (2c) are provided.

4. The fishing reel (1) according to claim 1, wherein
a positioning portion for positioning between the outer ring (27) and the first holder (23A) or the second holder (23B) is provided between the outer ring (27) and the first holder (23A) or the second holder (23B).

5. The fishing reel (1) according to claim 4, wherein
the positioning portion has a recess (27c2) formed in an outer circumferential surface (27c1) of a stopper (27c) of the one or more stoppers (27c) of the outer ring (27), and a projection portion (23c2) formed in the first holder (23A) or the second holder (23B) and fitted into the recess (27c2).

6. The fishing reel (1) according to claim 4, wherein
the positioning portion has a recess (27k) formed in an inner circumferential surface of the outer ring (27), and a radial protrusion portion (23k) formed in the first holder (23A) or the second holder (23B) and fitted into the recess (23k).

7. The fishing reel (1) according to claim 2, wherein
an anticorrosion plate (28) comprising a leg portion (28c) interposed between a stopper (27c) of the one or more stoppers (27c) of the outer ring (27) and the notch portion (2c) is disposed to overlap the one-way clutch (20) in the axial direction.

8. A one-way clutch (20) installed to allow rotation of a rotation drive shaft supported in a reel body (2) of a fishing reel in one direction and prevent rotation in the other direction, the reel body (2) being provided with a regulation portion that is fixed so as to regulate the movement of the one-way clutch in a rotation direction, wherein
the one-way clutch has an assembly structure comprising an inner ring (21), an outer ring (27), a first holder (23A) comprising a holding portion holding a biasing spring (24) for biasing a plurality of rolling members, and a second holder (23B) attached to the first holder so as to hold the outer ring (27) in an axial direction,
the first holder (23A) and the outer ring (23B) are respectively provided with one or more stoppers (23c, 27c) that protrude radially outward and overlap each other in the axial direction,
the outer ring (27) is configured to have play with respect to the regulation portion of the reel body (2), and
the first holder (23A) is configured to be in contact with the regulation portion without a gap.

9. The one-way clutch (20) according to claim 8, wherein
a positioning portion for positioning between the outer ring (27) and the first holder (23A) or the second holder (23B) is provided between the outer ring (27) and the first holder (23A) or the second holder (23B).

10. The one-way clutch (20) according to claim 9, wherein
the positioning portion has a recess (27k) formed in an outer circumferential surface (27c1) of a stopper (27c) of the one or more stoppers (27c) of the outer ring (27), and a projection portion (23c2) formed in the first holder (23A) or the second holder (23B) and fitted into the recess (27k).

11. The one-way clutch (20) according to claim 9, wherein
the positioning portion has a recess (27k) formed in an inner circumferential surface of the outer ring (27), and a radial protrusion portion (23k) formed in the first holder (23A) or the second holder (23B) and fitted into the recess (27k).

## Patentansprüche

1. Angelrolle (1), in die eine Einwegkupplung integriert ist, die Drehung einer im Rollenkörper (2) gestützten Drehantriebswelle in einer Richtung ermöglicht und Drehung in der anderen Richtung verhindert, wobei
die Einwegkupplung (20) eine Anordnungsstruktur aufweist, die einen Innenring (21), einen Außenring (27), einen ersten Halter (23A), der einen Halteabschnitt umfasst, der eine Vorspannfeder (24) zum Vorspannen einer Vielzahl von Wälzkörpern hält, und einen zweiten Halter (23B), der am ersten Halter so befestigt ist, dass er den Außenring (27) in Axialrichtung hält, umfasst,
der Spulenkörper (2) mit einem Regulierungsabschnitt bereitgestellt ist, der so befestigt ist, dass er die Bewegung der Einwegkupplung (20) einer in Drehrichtung regelt,
der erste Halter (23A) und der Außenring (27) jeweils mit einem oder mehreren Anschlägen (23c, 27c) bereitgestellt sind, die radial nach außen vorstehen und sich in Axialrichtung gegenseitig überlappen,
die Bewegung der Einwegkupplung (20) in der Drehrichtung durch den Regulierungsabschnitt des Spulenkörpers (2) und jeden Anschlag (23c, 27c) geregelt wird,
der Außenring (27) Spiel in Bezug auf den Regulierungsabschnitt aufweist, und
der erste Halter (23A) ohne Spalt mit dem Regulierungsabschnitt in Kontakt steht.

2. Angelrolle (1) nach Anspruch 1, wobei
der Regulierungsabschnitt ein Kerbabschnitt (2c) ist, der entlang einer Umfangsrichtung an einer im Spulenkörper (2) bereitgestellten Umfangswand (2C) gebildet ist und in der ein Anschlag (23c) des einen oder der mehreren Anschläge (23c) des ersten Halters und ein Anschlag (27c) des einen oder der mehreren Anschläge (27c) des Außenrings (27) angeordnet sind.

3. Angelrolle (1) nach Anspruch 2, wobei
zwei oder mehr Kerbabschnitte (2c) in gleichen Abständen in der Umfangsrichtung der Umfangswand bereitgestellt sind und die gleiche Anzahl von Anschlägen (23c, 27c) des ersten Halters (23) und des Außenrings (27) wie die Anzahl der Kerbabschnitte (2c) bereitgestellt ist.

4. Angelrolle (1) nach Anspruch 1, wobei
ein Positionierungsabschnitt zum Positionieren zwischen dem Außenring (27) und dem ersten Halter (23A) oder dem zweiten Halter (23B) zwischen dem Außenring (27) und dem ersten Halter (23A) oder dem zweiten Halter (23B) bereitgestellt ist.

5. Angelrolle (1) nach Anspruch 4, wobei
der Positionierungsabschnitt eine Aussparung (27c2) aufweist, die in einer Außenumfangsfläche (27c1) eines Anschlags (27c) des einen oder der mehreren Anschläge (27c) des Außenrings (27) gebildet ist, und einen Vorsprungsabschnitt (23c2), der im ersten Halter (23A) oder dem zweiten Halter (23B) gebildet ist und in die Aussparung (27c2) eingepasst ist.

6. Angelrolle (1) nach Anspruch 4, wobei
der Positionierungsabschnitt eine in einer Innenumfangsfläche des Außenrings (27) gebildete Aussparung (27k) und einen radialen Vorsprungsabschnitt (23k), der im ersten Halter (23A) oder im zweiten Halter (23B) gebildet ist und in die Aussparung (23k) eingepasst ist, aufweist.

7. Angelrolle (1) nach Anspruch 2, wobei
eine Korrosionsschutzplatte (28), die einen Schenkelabschnitt (28c) umfasst, der zwischen einem Anschlag (27c) des einen oder mehreren Anschläge (27c) des Außenrings (27) und dem Kerbabschnitt (2c) zwischengesetzt ist, so angeordnet ist, dass sie die Einwegkupplung (20) in der Axialrichtung überlappt.

8. Einwegkupplung (20), die so installiert ist, dass sie Drehung einer in einem Rollenkörper (2) einer Angelrolle gestützten Drehantriebswelle in einer Richtung ermöglicht und Drehung in der anderen Richtung verhindert, wobei der Rollenkörper (2) mit einem Regulierungsabschnitt bereitgestellt ist, der so befestigt ist, dass er die Bewegung der Einwegkupplung in einer Drehrichtung regelt, wobei
die Einwegkupplung eine Anordnungsstruktur aufweist, die einen Innenring (21), einen Außenring (27), einen ersten Halter (23A), der einen Halteabschnitt umfasst, der eine Vorspannfeder (24) zum Vorspannen einer Vielzahl von Wälzkörpern hält, und einen zweiten Halter (23B), der am ersten Halter so befestigt ist, dass er den Außenring (27) in einer Axialrichtung hält, umfasst,
der erste Halter (23A) und der Außenring (23B) jeweils mit einem oder mehreren Anschlägen (23c, 27c) bereitgestellt sind, die radial nach außen vorstehen und sich in der Axialrichtung gegenseitig überlappen,
der Außenring (27) so konfiguriert ist, dass er in Bezug auf den Regulierungsabschnitt des Rollenköpers (2) Spiel aufweist, und
der erste Halter (23A) so konfiguriert ist, dass er ohne Spalt mit dem Regulierungsabschnitt in Kontakt steht.

9. Einwegkupplung (20) nach Anspruch 8, wobei
ein Positionierungsabschnitt zum Positionieren zwischen dem Außenring (27) und dem ersten Halter (23A) oder dem zweiten Halter (23B) zwischen dem Außenring (27) und dem ersten Halter (23A) oder dem zweiten Halter (23B) bereitgestellt ist.

10. Einwegkupplung (20) nach Anspruch 9, wobei
der Positionierungsabschnitt eine Aussparung (27k) aufweist, die in einer Außenumfangsfläche (27c1) eines Anschlags (27c) des einen oder der mehreren Anschläge (27c) des Außenrings (27) gebildet ist, und einen Vorsprungsabschnitt (23c2), der im ersten Halter (23A) oder dem zweiten Halter (23B) gebildet ist und in die Aussparung (27k) eingepasst ist.

11. Einwegkupplung (20) nach Anspruch 9, wobei
der Positionierungsabschnitt eine in einer Innenumfangsfläche des Außenrings (27) gebildete Aussparung (27k) und einen radialen Vorsprungsabschnitt (23k), der im ersten Halter (23A) oder im zweiten Halter (23B) gebildet ist und in die Aussparung (27k) eingepasst ist, aufweist.

## Revendications

1. Moulinet de pêche (1) comportant un embrayage unidirectionnel qui permet la rotation d'un arbre d'entraînement en rotation supporté par un corps de moulinet (2) dans un sens et empêche la rotation dans l'autre sens, dans lequel
l'embrayage unidirectionnel (20) présente une structure d'assemblage comprenant une bague intérieure (21), une bague extérieure (27), un premier support (23A) comprenant une partie de maintien contenant un ressort de rappel (24) destiné à rappeler une pluralité d'éléments roulants, et un second support (23B) fixé au premier support de manière à maintenir la bague extérieure (27) dans un sens axial,
le corps de moulinet (2) est muni d'une partie de régulation qui est fixée de manière à réguler le mouvement de l'embrayage unidirectionnel (20) dans un sens de rotation,
le premier support (23A) et la bague extérieure (27) sont respectivement munis d'une ou plusieurs butées (23c, 27c) qui font saillie radialement vers l'extérieur et se chevauchent dans le sens axial,
le mouvement de l'embrayage unidirectionnel (20) dans le sens de rotation est régulé par la partie de régulation du corps de moulinet (2) et chaque butée (23c, 27c),
la bague extérieure (27) a du jeu par rapport à la partie de régulation, et
le premier support (23A) est en contact avec la partie de régulation sans interruption.

2. Moulinet de pêche (1) selon la revendication 1, dans lequel
la partie de régulation est une partie encoche (2c) qui est formée le long d'un sens circonférentiel sur une paroi circonférentielle (2C) prévue dans le corps de moulinet (2) et dans laquelle sont disposées une butée (23c) des une ou plusieurs butées (23c) du premier support et une butée (27c) des une ou plusieurs butées (27c) de la bague extérieure (27).

3. Moulinet de pêche (1) selon la revendication 2, dans lequel
deux ou plusieurs parties encoche (2c) sont prévues à intervalles égaux dans le sens circonférentiel de la paroi circonférentielle, et le même nombre de butées (23c, 27c) du premier support (23) et de la bague extérieure (27) que le nombre de parties encoche (2c) est prévu.

4. Moulinet de pêche (1) selon la revendication 1, dans lequel
une partie de positionnement pour le positionnement entre la bague extérieure (27) et le premier support (23A) ou le second support (23B) est prévue entre la bague extérieure (27) et le premier support (23A) ou le second support (23B).

5. Moulinet de pêche (1) selon la revendication 4, dans lequel
la partie de positionnement présente un évidement (27c2) formé dans une surface circonférentielle extérieure (27c1) d'une butée (27c) des une ou plusieurs butées (27c) de la bague extérieure (27), et une partie de projection (23c2) formée dans le premier support (23A) ou le second support (23B) et insérée dans l'évidement (27c2).

6. Moulinet de pêche (1) selon la revendication 4, dans lequel
la partie de positionnement présente un évidement (27k) formé dans une surface circonférentielle intérieure de la bague extérieure (27), et une partie de protubérance radiale (23k) formée dans le premier support (23A) ou le second support (23B) et insérée dans l'évidement (23k).

7. Moulinet de pêche (1) selon la revendication 2, dans lequel
une plaque anticorrosion (28) comprenant une partie branche (28c) interposée entre une butée (27c) des une ou plusieurs butées (27c) de la bague extérieure (27) et la partie encoche (2c) est disposée pour chevaucher l'embrayage unidirectionnel (20) dans le sens axial.

8. Embrayage unidirectionnel (20) installé pour permettre la rotation d'un arbre d'entraînement en rotation supporté dans un corps de moulinet (2) d'un moulinet de pêche dans un sens et empêcher la rotation dans l'autre sens, le corps de moulinet (2) étant muni d'une partie de régulation qui est fixée de manière à réguler le mouvement de l'embrayage unidirectionnel dans un sens de rotation, dans lequel
l'embrayage unidirectionnel présente une structure d'assemblage comprenant une bague intérieure (21), une bague extérieure (27), un premier support (23A) comprenant une partie de maintien contenant un ressort de rappel (24) destiné à rappeler une pluralité d'éléments roulants, et un second support (23B) fixé au premier support de manière à maintenir la bague extérieure (27) dans un sens radial,
le premier support (23A) et la bague extérieure (23B) sont respectivement munis d'une ou plusieurs butées (23c, 27c) qui font saillie radialement vers l'extérieur et se chevauchent dans le sens axial,
la bague extérieure (27) est configurée pour avoir du jeu par rapport à la partie de régulation du corps de moulinet (2), et
le premier support (23A) est configuré pour être en contact avec la partie de régulation sans interruption.

9. Embrayage unidirectionnel (20) selon la revendication 8, dans lequel
une partie de positionnement pour le positionnement entre la bague extérieure (27) et le premier support (23A) ou le second support (23B) est prévue entre la bague extérieure (27) et le premier support (23A) ou le second support (23B).

10. Embrayage unidirectionnel (20) selon la revendication 9, dans lequel
la partie de positionnement présente un évidement (27k) formé dans une surface circonférentielle extérieure (27c1) d'une butée (27c) des une ou plusieurs butées (27c) de la bague extérieure (27), et une partie de projection (23c2) formée dans le premier support (23A) ou le second support (23B) et insérée dans l'évidement (27k).

11. Embrayage unidirectionnel (20) selon la revendication 9, dans lequel
la partie de positionnement présente un évidement (27k) formé dans une surface circonférentielle intérieure de la bague extérieure (27), et une partie de protubérance radiale (23k) formée dans le premier support (23A) ou le second support (23B) et insérée dans l'évidement (27k).
